# EUROPEAN PATENT APPLICATION

(11) **EP 4 037 268 A1**
(43) Date of publication of application: **03.08.2022**
(21) Application number: 20881987.0
(22) Date of filing: 23.09.2020
(51) Int. Cl.: H04L 12/801, H04L 29/08

(54) **METHOD AND APPARATUS FOR ADJUSTING TRANSMISSION RATE**

(30) Priority: 30.10.2019 CN 201911046874
(71) Applicant: Huawei Technologies Co., Ltd., Longgang District, Shenzhen, Guangdong 518129 (CN)
(72) Inventor: HAO, Jiangtao, Shenzhen, Guangdong 518129 (CN)
(74) Representative: Isarpatent
(86) International application number: PCT/CN2020/117200
(87) International publication number: WO 2021/082818

(57) **Abstract**

Embodiments of this application disclose a method and an apparatus for adjusting a transmission rate, to alleviate network congestion and reduce a packet transmission delay. The method includes: A first device obtains a target rate and address information of a destination end, where the target rate is lower than bandwidth at a source end; and the first device sends a correspondence to a second device configured to adjust a packet transmission rate, where the correspondence includes the target rate and the address information of the destination end.

## Description

This application claims priority to Chinese Patent Application No. CN 201911046874.X, filed with the China National Intellectual Property Administration on October 30, 2019 and entitled "METHOD AND APPARATUS FOR ADJUSTING TRANSMISSION RATE", which is incorporated herein by reference in its entirety.

### TECHNICAL FIELD

This application relates to the communication field, and in particular, to a method and an apparatus for adjusting a transmission rate.

### BACKGROUND

With development of communication technologies, network bandwidth is increasingly larger and requirements on a network delay are increasingly higher. When sent from a source end to a destination end, a packet passes through one or more layers of forwarding devices. Bandwidth at an input end of a forwarding device of at least one layer of network is higher than bandwidth at an output end of the forwarding device, leading to bandwidth convergence. That is, bandwidth at the destination end, that is, a user-side device, is lower. This is because there are a large quantity of user-side devices but a small quantity of source ends. A plurality of user-side devices share bandwidth at one source end.

When bandwidth at an output end of a forwarding device is lower than bandwidth at a source end, network congestion may occur. That is, congestion occurs at the output end of the forwarding device when a packet is sent from the source end and passes through the forwarding device on a path to the destination end. It takes a long time before the forwarding device sends the packet. Consequently, a packet transmission delay is high. This cannot adapt to a current scenario that has a high network delay requirement.

### SUMMARY

Embodiments of this application provide a method and an apparatus for adjusting a transmission rate, to alleviate network congestion and reduce a packet transmission delay.

According to a first aspect, an embodiment of this application provides a method for adjusting a transmission rate. The method may be applied to a first device, and the first device may be a controller or a server. The method includes the following steps: First, the first device obtains a target rate and address information of a destination end; and then, the first device sends a correspondence to a second device configured to adjust a packet transmission rate, where the correspondence includes the target rate and the address information of the destination end. In this embodiment of this application, the second device may be a shaper integrated into a source end or a forwarding device, or a shaper independent of the source end or the forwarding device. In other words, the second device may limit a packet transmission rate matching the address information of the destination end to the target rate. Specifically, if the address information of the destination end is an Internet Protocol (internet protocol, IP) address of the destination end, rate limiting may be performed on a packet that arrives at the destination end. If the address information of the destination end is an IP address prefix of the destination end, rate limiting may be performed on a packet in a network segment corresponding to the IP address prefix of the destination end. In a conventional technology, for a forwarding device whose packet transmission rate at an input end is lower than or equal to bandwidth at a source end and whose packet transmission rate at an output end is lower than the bandwidth at the source end, the forwarding device receives and sends a group of packets without intervals. Consequently, network congestion occurs at both the input end and the output end of the forwarding device for subsequent packets, affecting a delay of the subsequent packets. In this application, when a packet sent by the second device at the target rate arrives at a forwarding device whose packet transmission rate at an input end is lower than or equal to bandwidth at the source end, a packet interval exists, and two groups of packets may be received alternately. Therefore, a possibility of packet congestion at the input end of the forwarding device is reduced. If bandwidth at an output end of the forwarding device is higher than the target rate, a packet interval exists, and two groups of packets may be sent alternately. Therefore, a possibility of packet congestion at the output end of the forwarding device is also reduced.

This embodiment of this application may provide three implementations of how the first device obtains the target rate.

In a possible implementation, there is a path from the source end to the destination end. The first device obtains, based on the address information of the destination end, a packet transmission rate of a third device communicating with the destination end, where the third device is on the path. The third device may be a forwarding device directly connected to the destination end, or may be a forwarding device indirectly connected to the destination end. The packet transmission rate of the third device is lower than the bandwidth at the source end. Therefore, the first device may determine the packet transmission rate of the third device as the target rate. In other words, when it is determined that the packet transmission rate of the third device is lower than the bandwidth at the source end, the packet transmission rate of the third device may be directly obtained, and is used as the target rate. This not only alleviates network congestion in the third device but also alleviates network congestion in a device that is on the path and whose bandwidth at an output end is higher than the target rate but lower than the bandwidth at the source end.

In another possible implementation, that the first device obtains the target rate includes: The first device obtains a packet transmission rate between two adjacent devices on a path from the second device to the destination end and determines a minimum value of the packet transmission rate between the two adjacent devices as the target rate. When the target rate is the minimum value of the packet transmission rate between the two adjacent devices on the path from the second device to the destination end, network congestion in devices on the entire path is minimized.

In another possible implementation, there are two paths from the second device to the destination end. A third device is on one path, and a fourth device is on the other path. In this case, the first device may obtain, based on the address information of the destination end, a packet transmission rate of the third device communicating with the destination end and a packet transmission rate of the fourth device communicating with the destination end. The first device determines the target rate based on the packet transmission rate of the third device and the packet transmission rate of the fourth device, where the target rate is a sum of the packet transmission rate of the third device and the packet transmission rate of the fourth device. That is, when there are two paths from the second device to the destination end, and the two paths are not backup paths of each other, the target rate of the packet output from the second device may be the sum of the packet transmission rate of the third device and the packet transmission rate of the fourth device. This can ensure that network congestion in the third device and the fourth device is alleviated, thereby reducing packet transmission delays on the two paths.

It may be understood that the foregoing three implementations do not constitute a limitation on the technical solutions of this application, and a person skilled in the art may design an implementation based on an actual situation.

According to a second aspect, an embodiment of this application provides a method for adjusting a transmission rate. The method may be applied to a second device. The method specifically includes the following steps: First, the second device receives a packet, where the packet includes a destination address; then, the second device obtains a target rate based on the destination address and a correspondence that is received from a first device in advance, where the correspondence includes the target rate and address information of a destination end, and the destination address matches the address information of the destination end; and finally, the second device sends the packet based on the target rate. As mentioned above, the second device may send the packet at the target rate. This alleviates network congestion in a forwarding device between the second device and the destination end and reduces a packet transmission delay.

The address information of the destination end may be an Internet Protocol (IP) address of the destination end or an IP address prefix of the destination end. In other words, the second device may perform rate limiting on a packet that reaches the destination end, or may perform rate limiting on a packet in a network segment corresponding to the IP address prefix of the destination end. If the second device perform rate limiting on the packet in the network segment corresponding to the IP address prefix of the destination end, the second device may first determine, based on the destination address, the IP address prefix of the destination end corresponding to the destination address, and then the second device obtains the target rate based on the correspondence and the IP address prefix of the destination end.

According to a third aspect, an embodiment of this application further provides an apparatus for adjusting a transmission rate, where the apparatus is applied to a first device. The apparatus includes: an obtaining unit, configured to obtain a target rate and address information of a destination end, where the target rate is lower than bandwidth at a source end; and a sending unit, configured to send a correspondence to a second device configured to adjust a packet transmission rate, where the correspondence includes the target rate and the address information of the destination end.

Optionally, obtaining the target rate includes: obtaining, based on the address information of the destination end, a packet transmission rate of a third device communicating with the destination end; and obtaining the target rate based on the packet transmission rate of the third device, where the target rate is the packet transmission rate of the third device.

Optionally, obtaining the target rate includes: obtaining, based on the address information of the destination end, a packet transmission rate of a third device communicating with the destination end and a packet transmission rate of a fourth device communicating with the destination end, where the third device and the fourth device are on different paths from the second device to the destination end; and determining the target rate based on the packet transmission rate of the third device and the packet transmission rate of the fourth device, where the target rate is a sum of the packet transmission rate of the third device and the packet transmission rate of the fourth device.

Optionally, obtaining the target rate includes: obtaining a packet transmission rate between two adjacent devices on a path from the second device to the destination end; and determining the target rate based on the packet transmission rate between the two adjacent devices, where the target rate is a minimum value of the packet transmission rate between the two adjacent devices.

According to a fourth aspect, an embodiment of this application further provides an apparatus for adjusting a transmission rate, where the apparatus is applied to a second device. The apparatus includes: a first receiving unit, configured to receive a packet, where the packet includes a destination address; an obtaining unit, configured to obtain a target rate based on the destination address and a correspondence that is from a first device, where the correspondence includes the target rate and address information of a destination end, and the destination address matches the address information of the destination end; and a sending unit, configured to send the packet based on the target rate.

Optionally, the address information of the destination end is an Internet Protocol (IP) address of the destination end.

Optionally, the address information of the destination end is an IP address prefix of the destination end.

The obtaining unit is configured to: determine, based on the destination address, the IP address prefix of the destination end corresponding to the destination address; and obtain the target rate based on the correspondence and the IP address prefix of the destination end.

Optionally, the apparatus further includes a second receiving unit, configured to receive the correspondence sent by the first device.

### BRIEF DESCRIPTION OF DRAWINGS

FIG. 1 is a schematic diagram of a typical architecture of an IP network according to an embodiment of this application;
FIG. 2 is a schematic diagram of sending a packet by a server 101 in a data center according to an embodiment of this application;
FIG. 3 is a schematic diagram of transmitting a packet in the network architecture shown in FIG. 1 according to an embodiment of this application;
FIG. 4 is a schematic diagram of a structure of a system for adjusting a transmission rate according to an embodiment of this application;
FIG. 5 is a schematic diagram of transmitting a packet in the network architecture shown in FIG. 4 according to an embodiment of this application;
FIG. 6 is a signaling diagram of a method for adjusting a transmission rate according to an embodiment of this application;
FIG. 7 is another schematic diagram of a structure of a system for adjusting a transmission rate according to an embodiment of this application;
FIG. 8 is a schematic diagram of a structure of an apparatus for adjusting a transmission rate according to an embodiment of this application;
FIG. 9 is another schematic diagram of a structure of an apparatus for adjusting a transmission rate according to an embodiment of this application; and
FIG. 10 is a schematic diagram of a structure of a device according to an embodiment of this application.

### DESCRIPTION OF EMBODIMENTS

In a current packet transmission method, network congestion occurs in a device between a source end and a destination end. Consequently, a transmission delay is high, and the method cannot adapt to a scenario that has a high network delay requirement.

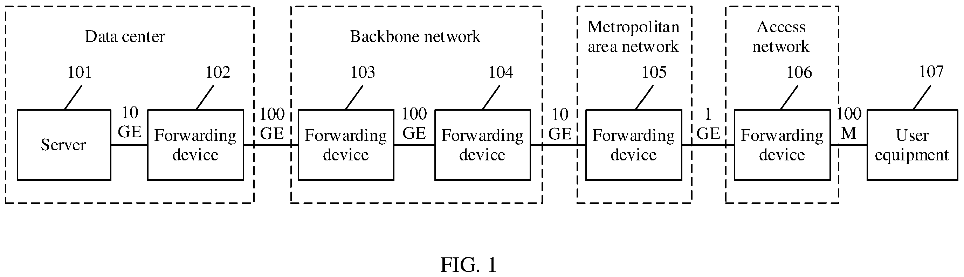

For example, FIG. 1 is a schematic diagram of a typical architecture of an Internet Protocol (Internet Protocol, IP) network. In the figure, the network architecture of the IP network includes a server 101, a forwarding device 102, a forwarding device 103, a forwarding device 104, a forwarding device 105, a forwarding device 106, and user equipment 107. The server 101 is connected to the forwarding device 102, the forwarding device 103 is connected to the forwarding device 102, the forwarding device 104 is connected to the forwarding device 103, the forwarding device 105 is connected to the forwarding device 104, the forwarding device 106 is connected to the forwarding device 105, and the user equipment 107 is connected to the forwarding device 106.

Both the server 101 and the forwarding device 102 belong to a data center (data center, DC). The forwarding device 103 and the forwarding device 104 belong to a backbone network, the forwarding device 106 belongs to a metropolitan area network, and the forwarding device 107 belongs to an access network. The forwarding device 103 is an edge network device connected to the data center.

In the embodiments of this application, the forwarding device 102, the forwarding device 103, the forwarding device 104, and the forwarding device 105 each may be a router (router), a switch (switch), or the like. The forwarding device 106 may alternatively be a base station in addition to the router (router) and the switch (switch).

The user equipment 107 is a device that provides voice and/or data connectivity for a user, or a chip disposed in the device, for example, a device with a wired connection function, a handheld device with a wireless connection function, or a vehicle-mounted device. Currently, some examples of the user equipment are: a mobile phone (mobile phone), a tablet computer, a desktop computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), and a wireless terminal in a smart home (smart home).

In FIG. 1, bandwidth at an output end of the server 101 is 10 GE, bandwidth at an input end of the forwarding device 102 is 10 GE, and bandwidth at an output end of the forwarding device 102 is 100 GE. Bandwidth at an input end of the forwarding device 103 is 100 GE, and bandwidth at an output end of the forwarding device 103 is 100 GE. Bandwidth at an input end of the forwarding device 104 is 100 GE, and bandwidth at an output end of the forwarding device 104 is 10 GE. Bandwidth at an input end of the forwarding device 105 is 10 GE, and bandwidth at an output end of the forwarding device 105 is 1 GE. Bandwidth at an input end of the forwarding device 106 is 1 GE, and bandwidth at an output end of the forwarding device 106 is 100 M.

That is, a packet transmission rate between the server 101 and the forwarding device 102 is 10 Gbps, a packet transmission rate between the forwarding device 102 and the forwarding device 103 is 100 Gbps, and a packet transmission rate between the forwarding device 103 and the forwarding device 104 is 100 Gbps, a packet transmission rate between the forwarding device 104 and the forwarding device 105 is 10 Gbps, a packet transmission rate between the forwarding device 105 and the forwarding device 106 is 1 Gbps, and a packet transmission rate between the forwarding device 106 and the user equipment 107 is 100 Mbps.

For ease of description, a packet transmission rate in the following content refers to a rate at which a device outputs a packet. For example, the packet transmission rate between the server 101 and the forwarding device 102 is described as a packet transmission rate of the server 101, that is, a rate at which the server 101 outputs a packet.

As shown in FIG. 1, packet transmission rates of the forwarding devices decrease layer by layer from the backbone network to the metropolitan area network and then to the access network. This is because more forwarding devices are deployed on a lower-layer network. If bandwidth at an input end of a forwarding device is higher than bandwidth at an output end of the forwarding device, network congestion may occur. It takes a long time for a packet to be output from the forwarding device after entering the forwarding device. Details are described below.

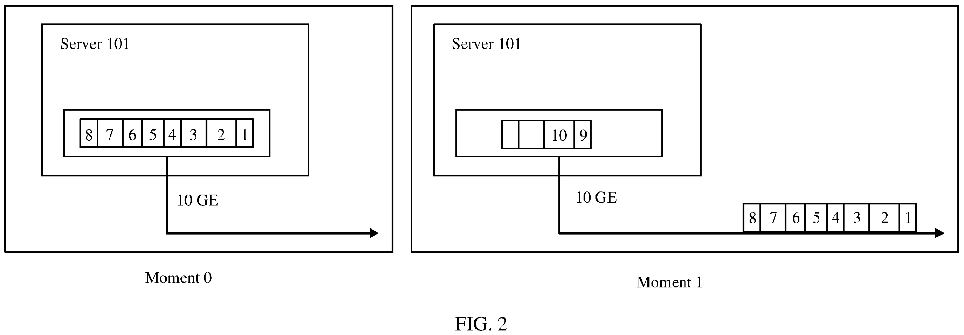

Currently, a source end, for example, the server 101 in the data center, usually sends a plurality of packets at a time. For example, in FIG. 2, the server 101 has a group of eight packets (a packet 1 to a packet 8) to be sent at a moment 0, and continuously sends the group of packets at a packet transmission rate of 10 Gbps at a moment 1.

Assuming that a size of each of the eight packets is 10 K bits, the eight packets are corresponding transmission data output from output ports of different bandwidths in the network architecture shown in FIG. 1, as shown in Table 1.

**Table 1**

| Packet transmission rate | 100 Gbps | 10 Gbps | 1G | 100 M |
|---|---|---|---|---|
| Total occupied time of the eight packets on a port (8 x 10 K bits) | 0.8 µs | 8 µs | 80 µs | 800 µs (0.8 ms) |
| Occupied time of each packet (10 K bits) | 0.1 µs | 1 µs | 10 µs | 100 µs (0.1 ms) |
| Packet interval | 0.9 µs | 0 | 0 | 0 |

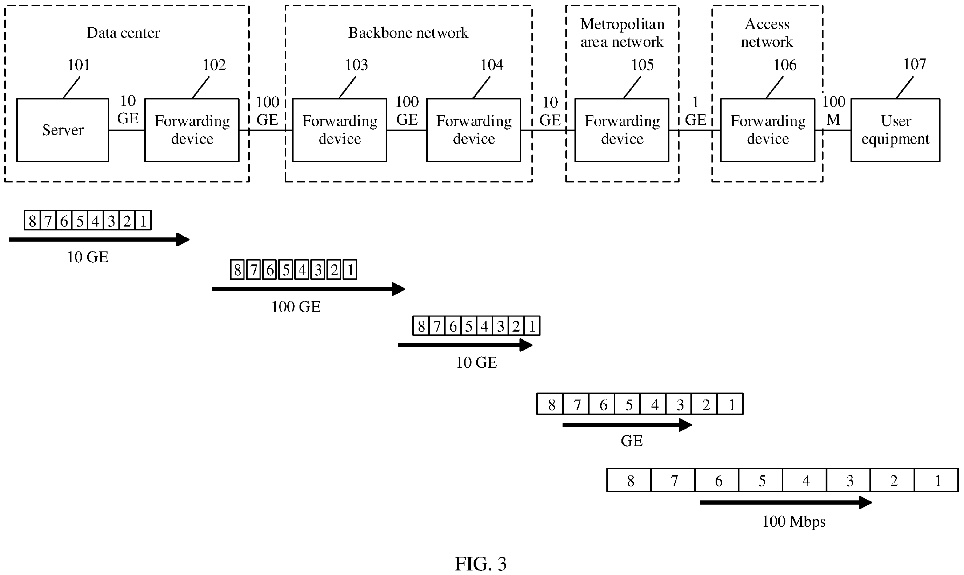

FIG. 3 is a schematic diagram of transmitting a packet in the network architecture shown in FIG. 1. With reference to Table 1, when the eight packets are sent from the server 101 at a packet transmission rate of 10 Gbps, there is no interval between adjacent packets. A sending time of each packet is 1 µs, and a total sending time of the eight packets is 8 µs. When the forwarding device 102 receives the packets at the packet transmission rate of 10 Gbps, and sends the packets at a packet transmission rate of 100 Gbps, a sending time of each packet is 0.1 µs. There are intervals between the adjacent packets in the group of packets, and a time interval is 0.9 µs. The packets are sent at a packet transmission rate of 100 Gbps after arriving at the forwarding device 103, and a time interval between the adjacent packets is still 0.9 µs. Next, the packets arrive at the forwarding device 104, a packet transmission rate of the forwarding device 104 is 10 Gbps, and a time interval between the adjacent packets output from the forwarding device 104 is 0. The packet transmission rate of the forwarding device 104 is the same as the packet transmission rate of the server 101. It may be considered that network congestion does not occur when the packets are output from the forwarding device 104. Network congestion occurs in the forwarding device 105. This is because the forwarding device 105 receives the group of packets at a packet transmission rate of 10 Gbps, and a time interval between the packets is 0. That is, the forwarding device 105 needs to first receive a group of packets before receiving a next packet or a next group of packets. The forwarding device 105 sends the packets at a packet transmission rate of 1 Gbps at an output end, and a total sending time of the group of packets is 80 µs. It is assumed that for two groups of packets received by the forwarding device 105 successively, sending of the former group of packets is not delayed, but the forwarding device 105 may send the latter group of packets only after the forwarding device 105 completes sending of the former group of packets. Consequently, after the latter group of packets are received, it takes 72 µs (80 µs - 8 µs) before the forwarding device 105 sends the latter group of packets. Similarly, network congestion also occurs in the forwarding device 106. That is, after the latter group of packets are received by the forwarding device 106, it takes 720 µs (800 µs - 80 µs) before the forwarding device 106 sends the latter group of packets. Therefore, the current packet transmission method cannot adapt to a scenario that has a high delay requirement.

To resolve the foregoing technical problem, the embodiments of this application provide a system for adjusting a transmission rate and a method and an apparatus for adjusting a transmission rate, to alleviate network congestion and reduce a network delay.

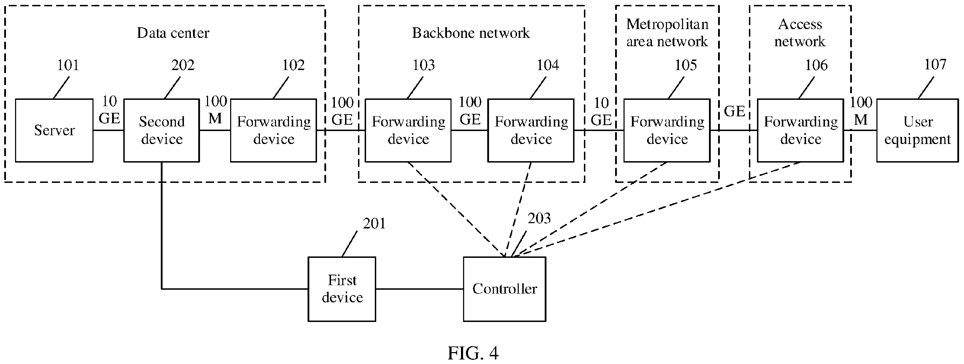

For ease of understanding, FIG. 4 is first used as an example to describe a system for adjusting a transmission rate according to an embodiment of this application.

In FIG. 4, in addition to the devices shown in FIG. 1, the system for adjusting a transmission rate further includes a first device 201, a second device 202, and a controller 203.

The first device 201 is connected to the second device 202, the second device 202 is connected to the server 101 and the forwarding device 102, and the controller 203 may be connected to one or more of the forwarding device 103, the forwarding device 104, the forwarding device 105, and the forwarding device 106.

In this embodiment of this application, the controller 203 is configured to: obtain a packet transmission rate of a forwarding device connected to the controller 203, and send the packet transmission rate to the first device 201. The controller 203 may be a device such as a remote authentication dial-in user service (Remote Authentication Dial-In User Service, RADIUS) server, a broadband remote access server (broadband remote access server, BRAS), a BRAS controller, a mobility management entity (mobility management entity, MME), or an access and mobility management function (access and mobility management function, AMF) network element. A communication protocol used for communication between the controller 203 and the forwarding device connected to the controller 203 may be a protocol such as a representational state transfer (representational state transfer, REST) protocol, a transmission control protocol (transmission control protocol, TCP), or a hypertext transfer protocol (Hypertext Transfer Protocol, HTTP).

The first device 201 may be integrated with the controller 203, or may be independent of the controller 203. If the first device 201 is independent of the controller 203, a communication protocol used for communication between the first device 201 and the controller 203 may be a protocol such as a user datagram protocol (user datagram protocol, UDP), a TCP, an IP, or an HTTP.

The first device 201 receives a packet transmission rate of the controller 203, determines a target rate based on the packet transmission rate, and delivers the target rate to the second device 202. The following describes the target rate, and details are not described herein.

The second device 202 may be a device configured to perform rate limiting on a packet transmission rate, such as a shaper (shaper), and the second device 202 may be independent of another device (as shown in FIG. 4), or may also be integrated with the server 101 and/or with one or more forwarding devices in the forwarding device 102 to a forwarding device 205.

It should be noted that, in FIG. 4, the second device 202 is connected between the server 101 and the forwarding device 102 as an independent device, and is configured to adjust a packet transmission rate of the server 101. In an actual application, alternatively, the second device may be connected between the forwarding device 102 and the forwarding device 103, and is configured to adjust a packet transmission rate of the forwarding device 102; the second device is connected between the forwarding device 103 and the forwarding device 104, and is configured to adjust a packet transmission rate of the forwarding device 103; the second device is connected between the forwarding device 104 and the forwarding device 105, and is configured to adjust a packet transmission rate of the forwarding device 104; or the second device is connected between the forwarding device 105 and the forwarding device 106, and is configured to adjust a packet transmission rate of the forwarding device 105.

The second device 202 is configured to adjust the packet transmission rate of the foregoing device as the target rate, where the target rate is lower than bandwidth at a source end. In the embodiment shown in FIG. 1, the bandwidth at the source end is 10 Gbps, and the target rate may be, for example, 100 Mbps or 1 Gbps, or may be another value lower than 10 Gbps different from the two values.

Specifically, the second device 202 may adjust the packet transmission rate of the server 101 to 100 Mbps, that is, a packet transmission rate of outputting a packet from an output end of the second device 202 is 100 Mbps. Based on bandwidth at output ends of the forwarding device 102, the forwarding device 103, the forwarding device 104, the forwarding device 105, and the forwarding device 106, packet transmission rates of the forwarding devices are also 100 Mbps.

If the second device 202 limits the packet transmission rate of the server 101 to 1 Gbps, based on the bandwidth at the output ends of the forwarding device 102, the forwarding device 103, the forwarding device 104, the forwarding device 105, and the forwarding device 106, the packet transmission rates of the forwarding device 102, the forwarding device 103, and the forwarding device 105 each are 1 Gbps, and the packet transmission rate of the forwarding device 106 is 100 Mbps.

The following describes the technical solutions of this application by using an example in which the target rate is 100 Mbps.

Assuming that a size of each of the eight packets is 10 K bits, the eight packets are corresponding transmission data output from output ports of different bandwidths in the network architecture shown in FIG. 4, as shown in Table 2.

**Table 2**

| Packet transmission rate | 100 Gbps | 10 Gbps | 1 Gbps | 100 Mbps |
|---|---|---|---|---|
| Total occupied time of the eight packets on a port (8 x 10 K bits) | 0.8 µs | 8 µs | 80 µs | 800 µs (0.8 ms) |
| Occupied time of each packet (10 K bits) | 0.1 µs | 1 µs | 10 µs | 100 µs (0.1 ms) |
| Packet interval | 99.9 µs | 99 µs | 90 µs | 0 |

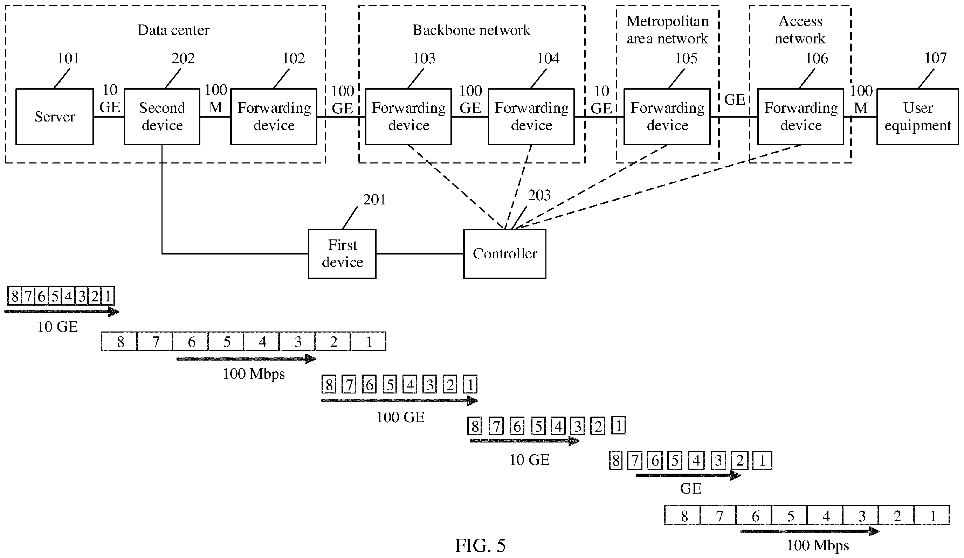

FIG. 5 is a schematic diagram of transmitting a packet in the network architecture shown in FIG. 4. With reference to Table 2, when the eight packets are sent from the server 101 to the second device 202 at a packet transmission rate of 10 Gbps, each packet occupies 1 µs, and there is no interval between adjacent packets. Because the second device 202 performs rate limiting, the packets are sent from the second device 202 at a packet transmission rate of 100 Mbps. Each packet occupies 100 µs, and there is no interval between the adjacent packets. Then, the packets enter the forwarding device 102 at a packet transmission rate of 100 Mbps, and the bandwidth at the output end of the forwarding device 102 is 100 GE. When the packets are output from the forwarding device 102, each packet occupies 0.1 µs, and a time interval between the adjacent packets is 99.9 µs. When the packets enter the forwarding device 103 after being output from the forwarding device 102, the bandwidth at the output end of the forwarding device 103 is 10 GE. When the packets are output from the forwarding device 103, each packet occupies 1 µs, and a time interval between the adjacent packets is 99 µs. Similarly, the bandwidth at the output end of the forwarding device 105 is 1 GE. When the packets are output from the forwarding device 105, each packet occupies 10 µs, and a time interval between the adjacent packets is 90 µs. Finally, when the packets enter the forwarding device 106, the bandwidth at the output end of the forwarding device 106 is 100 Mbps. Each packet occupies 100 µs, and a time interval between the adjacent packets output from the forwarding device 106 is 0.

It can be learned that, the second device 202 limits a rate of a packet sent by the server 101 at the packet transmission rate of 10 Gbps to 100 Mbps, even though the bandwidth (1 GE) at the output end of the forwarding device 105 is still lower than bandwidth (10 GE) at an output end of the server 101. Because there is a long interval between a packet received by the forwarding device 105 and a packet output from the forwarding device 105, packets of different groups may be sent at intervals of each other, and there is no need to wait for one group of packets to be sent before another group of packets is sent, thereby alleviating network congestion and reducing a network transmission delay.

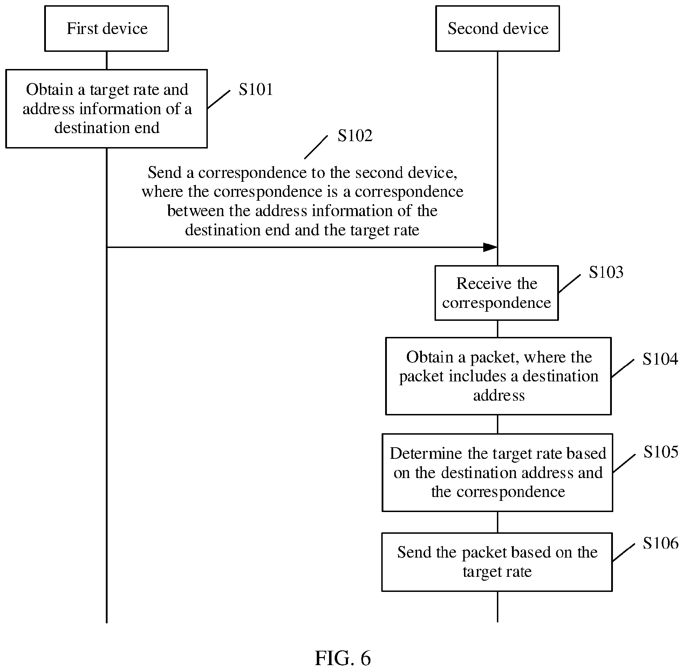

FIG. 6 is a signaling diagram of a method for adjusting a transmission rate according to an embodiment of this application.

The method for adjusting a transmission rate provided in this embodiment of this application includes the following steps.

S101. A first device obtains a target rate and address information of a destination end.

In this embodiment of this application, the first device may be, for example, the first device 201 in FIG. 4. The first device may obtain, from a controller (for example, the controller 203 in FIG. 4), a packet transmission rate of a forwarding device connected to the controller, and the forwarding device belongs to forwarding devices between a second device and the destination end. The first device determines the target rate based on the packet transmission rate of the forwarding device.

In a possible implementation, the target rate may be determined based on a packet transmission rate of a third device communicating with the destination end, and the third device is on a first path from a source end to the destination end. Specifically, the target rate may be equal to the packet transmission rate of the third device, and the packet transmission rate of the third device is lower than bandwidth at the source end. FIG. 4 is used as an example. The third device may be the forwarding device 105 or the forwarding device 106.

To obtain the first path, the controller may obtain network topology information of forwarding devices between the source end and the destination end, for example, information such as a connection relationship or connection ports between the forwarding devices, or identifiers of the forwarding devices, and then, generates the first path from the source end to the destination end based on an IP address of the destination end and the network topology information. Specifically, the controller may obtain the network topology information of the forwarding devices based on a protocol such as a border gateway protocol (border gateway protocol, BGP), a simple network management protocol (Simple Network Management Protocol, SNMP), or Netconf.

In another possible implementation, the target rate may be a minimum value of a packet transmission rate between two adjacent devices on a path from the second device to the destination end. Specifically, the first device obtains the packet transmission rate between the two adjacent devices on the path from the second device to the destination end, and the first device determines the minimum value of the packet transmission rate between the two adjacent devices as the target rate. It should be noted that the path from the second device to the destination end is a part of a first path or an entire first path. When the second device is the source end, the first path is the path from the second device to the destination end.

FIG. 4 is used as an example. The controller 203 obtains a packet transmission rate 100 Gbps of the forwarding device 103, a packet transmission rate 10 Gbps of the forwarding device 104, a packet transmission rate 1 Gbps of the forwarding device 105, and a packet transmission rate 100 Mbps of the forwarding device 106 between the second device 202 and the user equipment 107, and sends the packet transmission rates of the forwarding devices to the first device 201. If the first device 201 determines that the packet transmission rate of the forwarding device 106 is the lowest, the first device 201 uses the packet transmission rate of the forwarding device 106, that is, 100 Mbps, as the target rate.

It should be noted that, in some application scenarios, a packet transmission rate of a forwarding device directly connected to the destination end in the forwarding devices between the second device and the destination end is the lowest, and the target rate may be the packet transmission rate of the forwarding device directly connected to the destination end. As shown in FIG. 4, the packet transmission rate of the forwarding device 106 directly connected to the user equipment 107 is the lowest, and the target rate is 100 Mbps. In some other application scenarios, a packet transmission rate of a forwarding device that is indirectly connected to the destination end is the lowest. For example, assuming that a tunnel is established between the forwarding device 105 and the forwarding device 106 and a packet transmission rate on the tunnel is 80 Mbps, the target rate is the packet transmission rate of the forwarding device 105, that is, 80 Mbps.

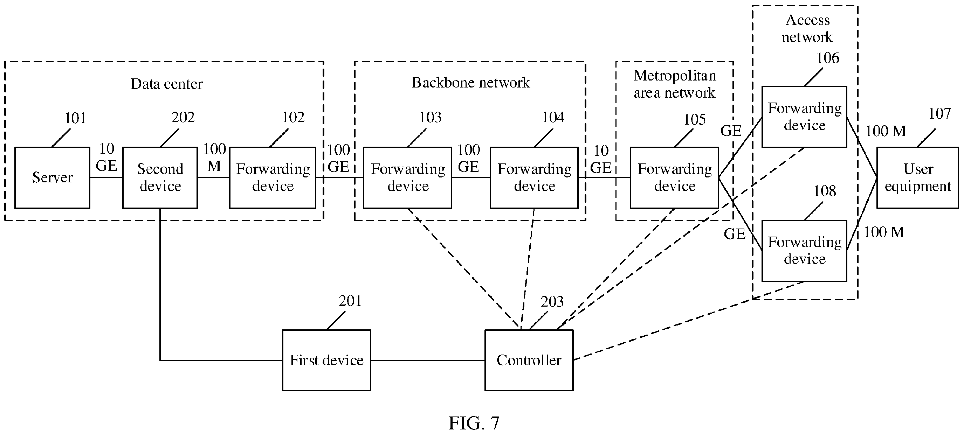

In still another possible implementation, in addition to a first path, there may be a second path from the second device to the destination end, and the second path and the first path are different paths. For example, in FIG. 7, a system for adjusting a transmission rate further includes a forwarding device 108, where the forwarding device 108 is connected between a forwarding device 105 and user equipment 107. Bandwidth of the forwarding device 108 is 100 Mbps.

When the first path and the second path are not backup paths of each other, for a forwarding device shared by the first path and the second path, such as a forwarding device 105, network congestion in the forwarding device 105 may be severe. Consequently, the first device may obtain, based on the address information of the destination end, a packet transmission rate of a third device communicating with the destination end and a packet transmission rate of a fourth device communicating with the destination end, and determine the target rate based on the packet transmission rate of the third device and the packet transmission rate of the fourth device, where the target rate is a sum of the packet transmission rate of the third device and the packet transmission rate of the fourth device. The third device is on the first path, the fourth device is on the second path, the third device is not on the second path, and the fourth device is not on the first path.

For example, the first device 201 obtains, by using a controller 203 based on address information of the user equipment 107, a packet transmission rate of a forwarding device 106 communicating with the user equipment 107 and a packet transmission rate of the forwarding device 108 communicating with the user equipment 107. Because the packet transmission rate of the forwarding device 106 and the packet transmission rate of the forwarding device 108 each are 100 Mbps, the target rate is 200 Mbps.

In this embodiment of this application, in addition to obtaining the target rate on the first path, the first device further needs to obtain the address information of the destination end. The first device may obtain the address information of the destination end from the controller connected to the forwarding device. For example, the controller 203 obtains the address information of the user equipment 107 and sends the address information of the user equipment 107 to the first device 201.

It should be noted that, if the destination end is a mobile terminal, the address information of the destination end may dynamically change with a location of the mobile terminal. Correspondingly, the controller needs to send changed address information to the first device in time.

In an actual application, the controller may actively report the address information of the destination end to the first device. Alternatively, the first device sends an information obtaining request to the controller, and the controller obtains the address information of the destination end based on the information obtaining request, and sends the address information of the destination end to the first device.

In this embodiment of this application, the address information of the destination end may be an IP address of the destination end and/or an IP address prefix of a network segment to which the destination end belongs. The IP address of the destination end is used to perform rate limiting on a packet sent to the destination end, and the IP address prefix of the network segment to which the destination end belongs is used to perform rate limiting on a packet at the destination end that belongs to the network segment.

For example, if rate limiting is performed only on a packet sent to the user equipment 107, the address information of the destination end may be an IP address of the user equipment 107. If rate limiting is performed on a packet at the destination end in a network segment to which the user equipment 107 belongs, an address of the destination end may be an IP address prefix of the forwarding device 106.

S102. The first device sends a correspondence to the second device, where the correspondence is a correspondence between the address information of the destination end and the target rate.

In this embodiment of this application, after obtaining the address information of the destination end and the target rate, the first device generates the correspondence between the address information of the destination end and the target rate, and sends the correspondence to the second device.

As mentioned above, the second device includes a rectifier. The rectifier is formed by a hardware leaky bucket (leaky bucket). After entering the leaky bucket, a packet is sent at a specific packet transmission rate. In this embodiment of this application, the packet transmission rate is the target rate, and different target rates are implemented by using different leaky buckets. A typical leaky bucket algorithm includes a token bucket algorithm. Because the algorithm is a mature technology, details are not described in this application.

In this embodiment of this application, the leaky bucket may be a single-layer leaky bucket, or may be a multi-layer leaky bucket. If the address information of the destination end is the IP address of the destination end or the IP address prefix of the destination end, the correspondence is a correspondence between the IP address of the destination end and the target rate, or a correspondence between the IP address prefix of the destination end and the target rate. In this case, the leaky bucket is a single-layer leaky bucket. If the address information of the destination end is the IP address of the destination end and the IP address prefix of the destination end, the correspondence is a correspondence between the IP address of the destination end and the target rate, and a correspondence between the IP address prefix of the destination end and the target rate. In this case, the leaky bucket is a multi-layer leaky bucket. It specifically depends on a quantity of IP address prefixes of the destination end. For example, assuming that the IP address of the destination end is A.B.C.D/32, the IP address prefix of the destination end may include one or more of A.B.C.0/24, A.B.C.0/20, and A.B.0.0/16. A network segment corresponding to A.B.C.0/20 includes a network segment corresponding to A.B.C.0/24, and a network segment corresponding to A.B.0.0/16 includes the network segment corresponding to A.B.C.0/20. If the IP address prefix of the destination end includes one of A.B.C.0/24, A.B.C.0/20, and A.B.0.0/16, the leaky bucket is a double-layer leaky bucket. That is, a packet is first sent to an upperlayer leaky bucket corresponding to the IP address prefix of the destination end. Then, the packet enters a lower-layer leaky bucket corresponding to the IP address of the destination end. If the IP address prefix of the destination end includes two of A.B.C.0/24, A.B.C.0/20, and A.B.0.0/16, the leaky bucket is a three-layer leaky bucket. The rest may be deduced by analogy.

S103. The second device receives the correspondence from the first device.

S104. The second device obtains a packet, where the packet includes a destination address.

In this embodiment of this application, S103 and S104 are performed in any sequence. That is, S103 may be performed before S104, may be performed after S104, or may be performed simultaneously with S104.

S105. The second device determines the target rate based on the destination address and the correspondence.

As mentioned above, the correspondence is the correspondence between the address information of the destination end and the target rate.

When the address information of the destination end in the correspondence is the IP address of the destination end, the second device may directly determine, based on the correspondence, the target rate corresponding to the destination address. For example, Table 3 is an example of the correspondence.

**Table 3**

| IP address of a destination end | Target rate |
|---|---|
| 1.1.1.1/32 | 100 Mbps |
| 1.10.10.1/32 | 300 Mbps |

When the destination address in the packet is 1.1.1.1/32, that is, the IP address of the user equipment 107, a corresponding target rate 100 Mbps may be obtained by looking up Table 3.

When the address information of the destination end in the correspondence is the IP address prefix of the destination end, the second device may first determine, based on the destination address, the IP address prefix of the destination end corresponding to the destination address, and then determine, based on the IP address prefix of the destination end corresponding to the destination address and the correspondence, the target rate corresponding to the destination address. For example, Table 4 is an example of the correspondence.

**Table 4**

| IP address prefix of a destination end | Target rate |
|---|---|
| 1.1.1.0/20 | 1 Gbps |
| 1.10.10.0/24 | 3 Gbps |

When the destination address in the packet is 1.1.1.1/32, a matched IP address prefix 1.1.1.0/20 of the destination end may be first determined based on the destination address 1.1.1.1/32. Then, based on the IP address prefix 1.1.1.0/20 of the destination end (for example, the IP address prefix of the forwarding device 106), a corresponding target rate 1 Gbps is obtained by looking up Table 4.

When the address information of the destination end in the correspondence is the IP address of the destination end and the IP address prefix of the destination end, the target rate may be directly obtained based on the destination address and the IP address of the destination end that is in the correspondence; or may first determine the corresponding IP address prefix of the destination end based on the destination address, and then obtain the target rate based on the IP address prefix of the destination end and the correspondence.

S106. The second device sends the packet based on the target rate.

In this embodiment of this application, the second device may be the source end, may be a forwarding device that can obtain a packet from the source end, or may be a device connected between the source end and a forwarding device or connected between forwarding devices. The second device may send the packet to the destination end at the target rate. Because the target rate is lower than the bandwidth at the source end, network congestion in a forwarding device that is between the source end and the destination end and bandwidth at whose output end is lower than the bandwidth at the source end can be alleviated. For example, when the target rate is the packet transmission rate of the third device, network congestion in the third device can be alleviated, and network congestion in a forwarding device whose packet transmission rate at the output end is higher than the packet transmission rate of the third device can be alleviated. For example, in the embodiment shown in FIG. 4, the third device is the forwarding device 106. The target rate is set to the packet transmission rate of the forwarding device 106, that is, 100 Mbps. This not only can alleviate network congestion in the forwarding device 106 but also can alleviate network congestion in the forwarding device 105. This is because when a network device 105 sends packets at the target rate, the target rate is lower than bandwidth at the output end of the network device 105. The packets are sent by the network device 105 at intervals, and packets of other flows may be synchronously sent within the intervals. This reduces a delay of transmitting the packets in the forwarding device 105. That is, network congestion is alleviated. For the forwarding device 106, a rate at which the forwarding device 106 receives packets becomes slow, that is, the rate decreases from original 1 Gbps to 100 Mbps, and the packet transmission rate at the output end is still 100 Mbps. Consequently, network congestion does not occur on the packets in the forwarding device 106.

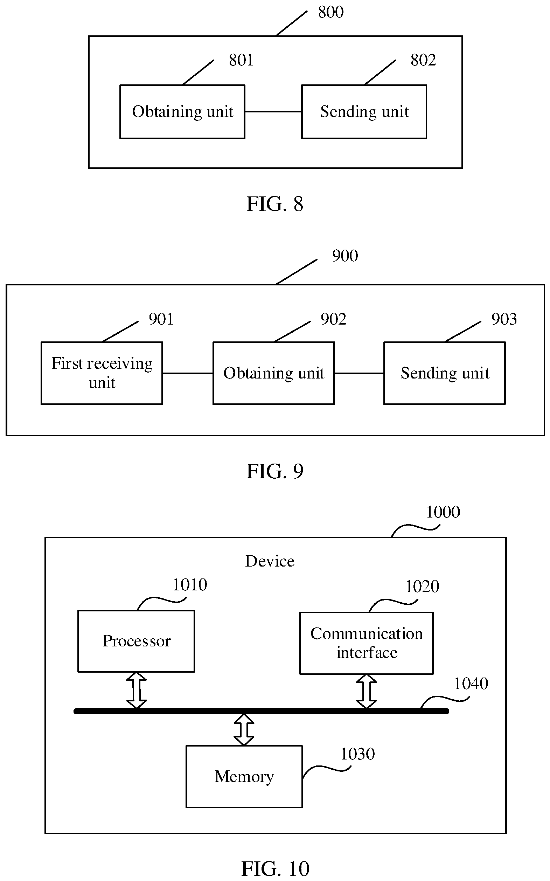

Refer to FIG. 8. An embodiment of this application further provides an apparatus 800 for adjusting a transmission rate. The apparatus may be applied to a first device, and the first device may implement functions of the first device 201 in the embodiments shown in FIG. 4 to FIG. 7.

The apparatus 800 for adjusting a transmission rate includes an obtaining unit 801 and a sending unit 802. The obtaining unit 801 may implement a function in S101 in the embodiment shown in FIG. 6, and the sending unit 802 may implement a function in S102 in the embodiment shown in FIG. 6.

The obtaining unit 801 is configured to obtain a target rate and address information of a destination end, where the target rate is lower than bandwidth at a source end.

The sending unit 802 is configured to send a correspondence to a second device configured to adjust a packet transmission rate, where the correspondence includes the target rate and the address information of the destination end.

For specific content of the apparatus for adjusting a transmission rate, refer to the foregoing method embodiments. Details are not described herein again.

Refer to FIG. 9. An embodiment of this application further provides an apparatus for adjusting a transmission rate. The apparatus may be applied to a second device, and the second device may implement functions of the second device 202 in the embodiments shown in FIG. 4 to FIG. 7.

The apparatus includes a first receiving unit 901, an obtaining unit 902, and a sending unit 903. The first receiving unit 901 can implement a function in S104 in the embodiment shown in FIG. 6, the obtaining unit 902 can implement a function in S105 in the embodiment shown in FIG. 6, and the sending unit 903 can implement a function in S106 in the embodiment shown in FIG. 6. Details are as follows:

The first receiving unit 901 is configured to receive a packet, where the packet includes a destination address.

The obtaining unit 902 is configured to obtain a target rate based on the destination address and a correspondence that is from a first device, where the correspondence includes the target rate and address information of a destination end, and the destination address matches the address information of the destination end.

The sending unit is configured to send the packet based on the target rate.

For specific content of the apparatus for adjusting a transmission rate, refer to the foregoing method embodiments. Details are not described herein again.

Correspondingly, an embodiment of this application further provides a device for adjusting a transmission rate corresponding to the apparatus 800 for adjusting a transmission rate. The device includes a processor and a memory, where the memory is configured to store instructions, and the processor is configured to execute the instructions in the memory, to perform the method for adjusting a transmission rate that is provided in the foregoing method embodiments and that is performed by the first device.

Correspondingly, an embodiment of this application further provides a device for adjusting a transmission rate corresponding to the apparatus 900 for adjusting a transmission rate. The device includes a processor and a memory, where the memory is configured to store instructions, and the processor is configured to execute the instructions in the memory, to perform the method for adjusting a transmission rate that is provided in the foregoing method embodiments and that is performed by the second device.

It should be noted that hardware structures of the foregoing device for adjusting a transmission rate corresponding to the apparatus 800 for adjusting a transmission rate and the foregoing device for adjusting a transmission rate corresponding to the apparatus 900 for adjusting a transmission rate may both be a structure shown in FIG. 10. FIG. 10 is a schematic diagram of a structure of a device according to an embodiment of this application.

Refer to FIG. 10. A device 1000 includes a processor 1010, a communication interface 1020, and a memory 1030. There may be one or more processors 1010 in the device 1000. In FIG. 10, one processor is used as an example. In this embodiment of this application, the processor 1010, the communication interface 1020, and the memory 1030 may be connected by using a bus system or in another manner. In FIG. 10, a connection by using a bus system 1040 is used as an example.

The processor 1010 may be a central processing unit (central processing unit, CPU), a network processor (network processor, NP), or a combination of the CPU and the NP. The processor 1010 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The memory 1030 may include a volatile memory (English: volatile memory), for example, a random-access memory (random-access memory, RAM). The memory 1030 may further include a non-volatile memory (English: non-volatile memory), for example, a flash memory (English: flash memory), a hard disk drive (hard disk drive, HDD), or a solid-state drive (solid-state drive, SSD). The memory 1030 may further include a combination of the foregoing types of memories.

Optionally, the memory 1030 stores an operating system, a program, an executable module or a data structure, a subset thereof, or an extended set thereof, where the program may include various operation instructions, to implement various operations. The operating system may include various system programs, to implement various basic services and process hardware-based tasks. The processor 1010 may read the program in the memory 1030, to implement the method for adjusting a transmission rate provided in the embodiments of this application.

The bus system 1040 may be a peripheral component interconnect (peripheral component interconnect, PCI) bus, an extended industry standard architecture (extended industry standard architecture, EISA) bus, or the like. The bus system 1040 may be classified into an address bus, a data bus, a control bus, and the like. For ease of representation, only one thick line is used to represent the bus in FIG. 10, but this does not mean that there is only one bus or only one type of bus.

An embodiment of this application further provides a system for adjusting a transmission rate, where the system includes a first device and a second device. The first device in the system may perform a processing step performed by the first device 201 in the embodiment shown in FIG. 6, or correspondingly, the first device in the system is the apparatus 800 for adjusting a transmission rate in the embodiment shown in FIG. 8. The second device in the system may perform a processing step performed by the second device 202 in the embodiment shown in FIG. 6, or correspondingly, the second device in the system is the apparatus 900 for adjusting a transmission rate in the embodiment shown in FIG. 9.

An embodiment of this application further provides a computer-readable storage medium, including instructions. When the instructions are run on a computer, the computer is enabled to perform the method for adjusting a transmission rate that is provided in the foregoing method embodiments and that is performed by the first device.

An embodiment of this application further provides a computer-readable storage medium, including instructions. When the instructions are run on a computer, the computer is enabled to perform the method for adjusting a transmission rate that is provided in the foregoing method embodiments and that is performed by the second device.

An embodiment of this application further provides a computer program product including instructions. When the computer program product runs on a computer, the computer is enabled to perform the method for adjusting a transmission rate that is provided in the foregoing method embodiments and that is performed by the first device.

An embodiment of this application further provides a computer program product including instructions. When the computer program product runs on a computer, the computer is enabled to perform the method for adjusting a transmission rate that is provided in the foregoing method embodiments and that is performed by the second device.

In this application, terms such as "first", "second", "third", and "fourth" (if exists) in the specification, the claims, and the accompanying drawings are intended to distinguish between similar objects but do not necessarily indicate a specific order or sequence. It should be understood that the data used in such a way are interchangeable in proper cases so that the embodiments described herein can be implemented in an order except the order illustrated or described herein. In addition, terms such as "comprise", "have", and any variations thereof are intended to cover nonexclusive inclusions, for example, a process, method, system, product, or device that includes a series of steps or units is not necessarily limited to those clearly listed steps or units, but may include other steps or units that are not clearly listed or inherent to such a process, method, product, or device.

It can be clearly understood by a person skilled in the art that, for a purpose of convenient and brief descriptions, for a detailed working process of the foregoing system, apparatus, and unit, refer to a corresponding process in the foregoing method embodiment. Details are not described herein.

In the embodiments provided in this application, it should be understood that the disclosed system, apparatus, and method may be implemented in another manner. For example, the described apparatus embodiments are merely examples. For example, division into the units is merely logical module division. In an actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in electrical, mechanical, or other forms.

Units described as separate components may or may not be physically separated, and components displayed as units may or may not be physical units, that is, and the components may be located in one position, or may be distributed to a plurality of network units. Some or all of the units may be obtained depending on an actual requirement to implement the objectives of the solutions in the embodiments.

In addition, module units in the embodiments of this application may be integrated into one processing unit. Alternatively, each of the units may exist alone physically, or at least two units are integrated into one unit. The integrated unit may be implemented in a form of hardware, or may be implemented in a form of a software module unit.

When the integrated unit is implemented in a form of a software module unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium, and includes several instructions for indicating a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

A person skilled in the art should be aware that in one or more examples, functions described in the present invention may be implemented by using hardware, software, firmware, or any combination thereof. When software is used to implement the functions, the functions may be stored in a computer-readable medium or transmitted as one or more instructions or code in the computer-readable medium. The computer-readable medium includes a computer storage medium and a communication medium, where the communication medium includes any medium that facilitates transmission of a computer program from one place to another. The storage medium may be any available medium accessible to a general-purpose computer or a dedicated computer.

The objectives, technical solutions, and beneficial effects of the present invention are further described in detail in the foregoing specific implementations. It should be understood that the foregoing descriptions are merely specific implementations of the present invention.

The foregoing embodiments are merely intended to describe the technical solutions of this application, but not to limit this application. Although this application is described in detail with reference to the foregoing embodiments, a person of ordinary skill in the art should understand that they may still make modifications to the technical solutions recorded in the foregoing embodiments or make equivalent replacements to some technical features thereof without departing from the scope of the technical solutions of the embodiments of this application.

## Claims

1. A method for adjusting a transmission rate, wherein the method comprises:
obtaining, by a first device, a target rate and address information of a destination end, wherein the target rate is lower than bandwidth at a source end; and
sending, by the first device, a correspondence to a second device configured to adjust a packet transmission rate, wherein the correspondence comprises the target rate and the address information of the destination end.

2. The method according to claim 1, wherein the obtaining, by a first device, a target rate comprises:
obtaining, by the first device based on the address information of the destination end, a packet transmission rate of a third device communicating with the destination end; and
determining, by the first device, the target rate based on the packet transmission rate of the third device, wherein the target rate is the packet transmission rate of the third device.

3. The method according to claim 1, wherein the obtaining, by a first device, a target rate comprises:
obtaining, by the first device based on the address information of the destination end, a packet transmission rate of a third device communicating with the destination end and a packet transmission rate of a fourth device communicating with the destination end, wherein the third device and the fourth device are on different paths from the second device to the destination end; and
determining, by the first device, the target rate based on the packet transmission rate of the third device and the packet transmission rate of the fourth device, wherein the target rate is a sum of the packet transmission rate of the third device and the packet transmission rate of the fourth device.

4. The method according to claim 1, wherein the obtaining, by a first device, a target rate comprises:
obtaining, by the first device, a packet transmission rate between two adjacent devices on a path from the second device to the destination end; and
determining, by the first device, the target rate based on the packet transmission rate between the two adjacent devices, wherein the target rate is a minimum value of the packet transmission rate between the two adjacent devices.

5. A method for adjusting a transmission rate, wherein the method comprises:
receiving, by a second device, a packet, wherein the packet comprises a destination address;
obtaining, by the second device, a target rate based on the destination address and a correspondence that is from a first device, wherein the correspondence comprises the target rate and address information of a destination end, and the destination address matches the address information of the destination end; and
sending, by the second device, the packet based on the target rate.

6. The method according to claim 5, wherein the address information of the destination end is an Internet Protocol IP address of the destination end.

7. The method according to claim 5, wherein the address information of the destination end is an IP address prefix of the destination end, and the obtaining, by the second device, a target rate based on the destination address and a correspondence that is from a first device comprises:
determining, by the second device based on the destination address, the IP address prefix of the destination end corresponding to the destination address; and
obtaining, by the second device, the target rate based on the correspondence and the IP address prefix of the destination end.

8. The method according to any one of claims 5 to 7, wherein the method further comprises:
receiving, by the second device, the correspondence sent by the first device.

9. An apparatus for adjusting a transmission rate, wherein the apparatus is applied to a first device, and the apparatus comprises:
an obtaining unit, configured to obtain a target rate and address information of a destination end, wherein the target rate is lower than bandwidth at a source end; and
a sending unit, configured to send a correspondence to a second device configured to adjust a packet transmission rate, wherein the correspondence comprises the target rate and the address information of the destination end.

10. The apparatus according to claim 9, wherein obtaining the target rate comprises:
obtaining, based on the address information of the destination end, a packet transmission rate of a third device communicating with the destination end; and
determining the target rate based on the packet transmission rate of the third device, wherein the target rate is the packet transmission rate of the third device.

11. The apparatus according to claim 9, wherein obtaining the target rate comprises:
obtaining, based on the address information of the destination end, a packet transmission rate of a third device communicating with the destination end and a packet transmission rate of a fourth device communicating with the destination end, wherein the third device and the fourth device are on different paths from the second device to the destination end; and
determining the target rate based on the packet transmission rate of the third device and the packet transmission rate of the fourth device, wherein the target rate is a sum of the packet transmission rate of the third device and the packet transmission rate of the fourth device.

12. The apparatus according to claim 9, wherein obtaining the target rate comprises:
obtaining a packet transmission rate between two adjacent devices on a path from the second device to the destination end; and
determining the target rate based on the packet transmission rate between the two adjacent devices, wherein the target rate is a minimum value of the packet transmission rate between the two adjacent devices.

13. An apparatus for adjusting a transmission rate, wherein the apparatus is applied to a second device, and the apparatus comprises:
a first receiving unit, configured to receive a packet, wherein the packet comprises a destination address;
an obtaining unit, configured to obtain a target rate based on the destination address and a correspondence that is from a first device, wherein the correspondence comprises the target rate and address information of a destination end, and the destination address matches the address information of the destination end; and
a sending unit, configured to send the packet based on the target rate.

14. The apparatus according to claim 13, wherein the address information of the destination end is an Internet Protocol IP address of the destination end.

15. The apparatus according to claim 13, wherein the address information of the destination end is an IP address prefix of the destination end; and
the obtaining unit is configured to: determine, based on the destination address, the IP address prefix of the destination end corresponding to the destination address; and obtain the target rate based on the correspondence and the IP address prefix of the destination end.

16. The apparatus according to any one of claims 13 to 15, wherein the apparatus further comprises:
a second receiving unit, configured to receive the correspondence sent by the first device.
